# EUROPEAN PATENT SPECIFICATION

(11) **EP 0 794 895 B1**
(45) Date of publication and mention of the grant of the patent: **21.06.2000**
(21) Application number: 95944099.1
(22) Date of filing: 06.12.1995
(51) Int. Cl.: B64C 25/50

(54) **LANDING GEAR AXLE STEERING WITHOUT WALKING BEAM**
FLUGZEUGFAHRWERKACHSLENKUNG OHNE LENKSTANGE
DIRECTION D'ESSIEUX DE TRAIN D'ATTERRISSAGE SANS BALANCIER FLOTTANT

(30) Priority: 08.12.1994 US 352326
(43) Date of publication of application: 17.09.1997
(73) Proprietor: THE BOEING COMPANY, Seattle, Washington 98124-2207 (US)
(72) Inventor: MENEGHETTI, Michael, J., Blaine, WA 98231 (US)
(74) Representative: Land, Addick Adrianus Gosling
(86) International application number: PCT/US95/16192
(87) International publication number: WO 96/17771

(56) References cited:
- EP-A- 0 713 826
- FR-A- 1 544 174
- GB-A- 896 054
- US-A- 2 538 388
- US-A- 2 943 820
- US-A- 5 242 131

## Description

### Background Of The Invention

The present invention relates to a six wheel three axle truck assembly including a truck beam, at least a steerable forward or aft wheel axle pivotally arranged on said truck beam though a vertical shaft, and at least one actuator arranged between said truck beam and said at least one steerable wheel axle. Such a six wheel truck assembly is known from US-A-5 242 131.

This prior art document discloses a six wheel, three axle, bogie type main landing gear for an aircraft in which the forward or aft axle is steerable in order to minimize tire scrubbing when the aircraft is executing a turn. The steerable axle is pivoted by means of two hydraulic actuators arranged on opposite sides of the lengthwise axis of the truck, which are coordinated in their operation such that one actuator is extended as the other one is retracted and vice versa.

In EP-A-0 713 826, which is included in the prior art under Article 54(3) EPC, a six wheel, three axle truck assembly is disclosed having steerable forward and aft wheel axles. Each wheel axle is actuated by a single hydraulic actuator supported by a walking beam.

The invention now has for his object to provide a six wheel truck assembly of the type described above, which has less actuator parts and may be utilized in those design conditions where more space is available above the truck beam due e.g. to a wider truck or repositioned torque links and accessories.

### Summary Of The Invention

To this end the invention provides a six wheel three axle truck assembly including a truck beam, at least a steerable forward or aft wheel axle pivotally arranged on said truck beam though a vertical shaft, and at least one actuator arranged between said truck beam and said at least one steerable wheel axle, characterized in that both the forward and aft wheel axles are steerable and each have a single associated actuator, each said actuator being a center-locking actuator and being arranged and dimensioned for providing the total power required two drive said wheel axle about said vertical shaft without walking beam assistance. By using only a single, albeit large diameter actuator for pivoting each wheel axle, rather than two actuators or an actuator in combination with a walking beam, a reduction in weight and costs may be achieved.

### Brief Description Of The Drawings

The foregoing object and many of the attendant advantages of this invention will become more readily appreciated as the same becomes better understood by reference to the following detailed description when taken in conjunction with the accompanying drawings wherein:
Fig. 1 is illustrative of an isometric view of the left hand gear of a six wheel truck assembly showing use of an actuator alone for providing power to drive the wheel axle about its vertical shaft; and,
Fig. 2 is a section through the truck beam vertical plane illustrative of the manner of configuring the design of the truck beam to open up more space for the actuator.

### Description Of The Preferred Embodiment

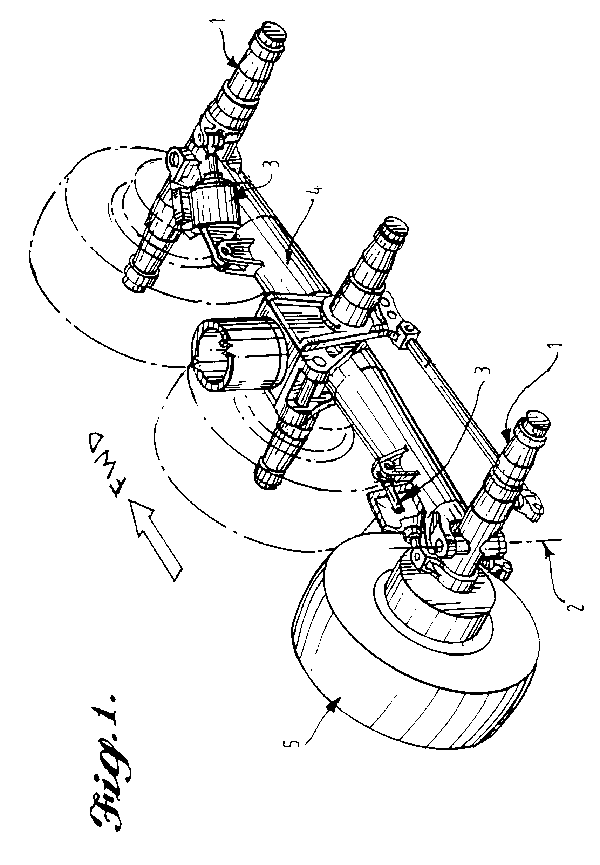

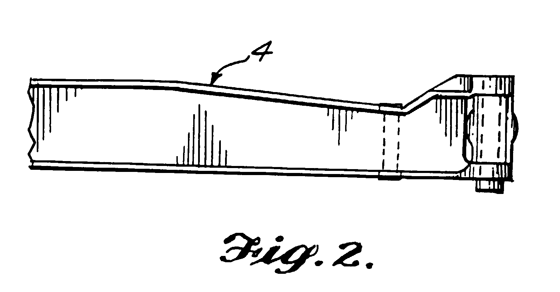

Turning now to the Figure 1 of the drawings it will be seen that a set of wheels 5 is driven about vertical shaft 2 using a single center-locking actuator 3. The geometry layout including truck beam 4 configuration as shown in Figure 2 frees up more space for center-locking actuator 3 which alone provides the power to drive wheel axle 1 about its vertical shaft 2. In addition to steering, the functional requirements of this mechanism include the necessity of locking the wheel axle 1 when steering is not being used. This function is integrated within center-locking actuator 3 as described in my earlier filed corresponding U.S. patent application titled "Landing Gear Axle Steering" (EP-A-0 713 826). The steering arrangement disclosed in EP-A-0 713 826 provides for a more compact arrangement using a center-locking actuator and walking beam assistance. However, in those design conditions where more space is available in the region above the truck beam (due to a wider truck or e.g. repositioned torque links and accessories) then the present landing gear sterling system without walking beam may be utilized to advantage. Of necessity, for a given axle turning moment required, the present single actuator without walking beam will have to exert a greater load and thus be larger in diametrical size than one with assistance.

One manner of increasing space available for the actuator is to reconfigure design of truck beam 4 as shown in Figure 2 thereby reducing weight and cost through use of fewer components. Elimination of mechanical assistance by the present steering system configuration and advantages thereof is permitted instead of the steering configuration disclosed in EP-A-0 713 826 only through installation requirements where more space is available in the region above truck beam 4.

## Claims

1. A six wheel three axle truck assembly including a truck beam (4), at least a steerable forward or aft wheel axle (1) pivotally arranged on said truck beam (4) though a vertical shaft (2), and at least one actuator (3) arranged between said truck beam (4) and said at least one steerable wheel axle (1), **characterized in that** both the forward and aft wheel axles (1) are steerable and each have a single associated actuator (3), each said actuator (3) being a center-locking actuator and being arranged and dimensioned for providing the total power required to drive said wheel axle (1) about said vertical shaft (2) without walking beam assistance.

2. The truck assembly of claim 1, **characterized in that** said truck beam (4) is configured to provide space for each said single center-locking actuator (3).

## Patentansprüche

1. Fahrwerks-Anordnung mit sechs Rädern und drei Achsen, welche einen Fahrwerks-Träger (4) aufweist, welche weiterhin eine lenkbare vordere oder rückwärtige Radachse (1) hat, die schwenkbar auf dem Fahrwerks-Träger (4) über eine vertikale Welle (2) angeordnet ist, und welche weiterhin mit wenigstens einer Betätigungseinrichtung (3) ausgestattet ist, welche zwischen dem Fahrwerks-Träger (4) und der wenigstens einen vorhandenen lenkbaren Radachse (1) angeordnet ist, dadurch **gekennzeichnet,**
daß sowohl die vordere als auch die rückwärtige Radachse (1) lenkbar sind, daß jeder Radachse eine einzelne Betätigungseinrichtung (3) zugeordnet ist, daß jede Betätigungseinrichtung (3) als Betätigungseinrichtung mit einer Mittelverriegelung ausgebildet ist und daß jede Betätigungseinrichtung derart angeordnet und dimensioniert ist, daß sie die gesamte Kraft aufbringt, welche dazu erforderlich ist, um die Radachse (1) um die vertikale Welle (2) zu bewegen, ohne daß dazu die Unterstützung einer Lenkstange erforderlich ist.

2. Fahrwerks-Anordnung nach Anspruch 1,
dadurch **gekennzeichnet,**
daß der Fahrwerks-Träger (4) in seiner Konfiguration derart ausgebildet ist, daß Raum für jede einzelne Betätigungseinrichtung (3) mit Mittelverriegelung zur Verfügung steht.

## Revendications

1. Ensemble de train à trois essieux et six roues comprenant un balancier (4), au moins un essieu de roue avant ou arrière orientable (1) disposé de façon pivotante sur ledit balancier (4) grâce à un arbre vertical (2), et au moins un dispositif d'actionnement (3) disposé entre ledit balancier (4) et ledit au moins un essieu de roue orientable (1), caractérisé en ce que les deux essieux de roue avant et arrière (1) sont orientables et ont chacun un unique dispositif d'actionnement (3), chaque dit dispositif d'actionnement (3) étant un dispositif d'actionnement à blocage en position centrale et étant disposé et dimensionné afin de procurer la puissance totale exigée pour entraîner ledit essieu de roue (1) autour dudit axe vertical (2) sans l'assistance d'un basculeur.

2. Ensemble de train selon la revendication 1, caractérisé en ce que ledit balancier (4) est configuré afin de procurer de l'espace pour chaque dit unique dispositif d'actionnement à blocage en position centrale (3).
